# EUROPÄISCHE PATENTSCHRIFT

(11) **EP 3 682 539 B1**
(45) Veröffentlichungstag und Bekanntmachung des Hinweises auf die Patenterteilung: **26.10.2022**
(21) Anmeldenummer: 17807713.7
(22) Anmeldetag: 07.11.2017
(51) Int. Cl.: H02M 7/501, H02M 7/483

(54) **VERFAHREN ZUM BETRIEB EINES MEHRPHASIGEN MEHRSTUFENSTROMRICHTERS UND EIN ENTSPRECHENDER MEHRPHASIGER MEHRSTUFENSTROMRICHTER**
METHOD FOR OPERATING A MULTI-PHASE MULTI-STAGE POWER CONVERTER AND A CORRESPONDING MULTI-PHASE MULTI-STAGE POWER CONVERTER
PROCÉDÉ D'ACTIONNEMENT D'UN CONVERTISSEUR MULTIPHASÉ À PLUSIEURS ÉTAGES ET CONVERTISSEUR MULTIPHASÉ À PLUSIEURS ÉTAGES CORRESPONDANT

(43) Veröffentlichungstag der Anmeldung: 22.07.2020
(73) Patentinhaber: Siemens Energy Global GmbH & Co. KG, 81739 München (DE)
(72) Erfinder: ANTES, Andreas, 91358 Kunreuth (DE); PIESCHEL, Martin, 90473 Nürnberg (DE)
(86) Internationale Anmeldenummer: PCT/EP2017/078444
(87) Internationale Veröffentlichungsnummer: WO 2019/091543

(56) Entgegenhaltungen:
- WO-A1-2017/021642
- WO-A1-2017/021642
- GB-A- 2 538 270
- GB-A- 2 538 270
- US-A1- 2012 314 466
- US-A1- 2012 314 466
- BOCKER JAN ET AL: "Experimental Comparison of Model Predictive Control and Cascaded Control of the Modular Multilevel Converter", IEEE TRANSACTIONS ON POWER ELECTRONICS, INSTITUTE OF ELECTRICAL AND ELECTRONICS ENGINEERS, USA, vol. 30, no. 1, 1 January 2015 (2015-01-01), pages 422-430, XP011557533, ISSN: 0885-8993, DOI: 10.1109/TPEL.2014.2309438 [retrieved on 2014-08-26]

## Beschreibung

Die Erfindung betrifft ein Verfahren zum Betrieb eines mehrphasigen Mehrstufenstromrichters an einem elektrischen Energieversorgungsnetz insbesondere mit relativ wenigen Sub-Modulen, gemäß dem Oberbegriff des Anspruchs 1, wobei der Mehrstufenstromrichter über einen Transformator an das dreiphasige elektrische Energieversorgungsnetz anschließbar ist und mehrere Phasenmodule aufweist. Weiter betrifft die Erfindung einen mehrphasigen Mehrstufenstromrichter zur Durchführung des Verfahrens.

Mehrphasige modulare Mehrstufenstromrichter (Modular Multilevel Converter MMC) sind bekannt und weisen mehrere Phasenmodule auf, die jeweils aus einer Vielzahl von elektrisch in Reihe geschalteten zweipoligen Sub-Modulen gebildet sind. Jedes Sub-Modul weist ein Powermodul mit mehreren Halbleiterschaltern und einem Energiespeicher auf, an dem eine Zwischenkreisspannung anliegt, die mit der Energie korrespondiert, die im Sub-Modul gespeichert ist.

Modulare Mehrstufenstromrichter verursachen durch die gestufte Spannung an ihren ausgangsseitigen Anschlussklemmen sehr geringe Netzrückwirkungen (Verzerrungen, Oberschwingungen). Aufgrund von Kostenvorteilen werden Sub-Module mit höheren Kondensatorspannungen eingesetzt, um die Anzahl der Sub-Module gering zu halten. Jedoch benötigen modulare Mehrstufenstromrichter mit wenigen (also weniger als 20) in Reihe geschalteten Sub-Modulen pro Phasenmodul (Stromrichterzweig) dennoch passive Filter, um die Netzrückwirkungen zu verringern. Passivfilter benötigen allerdings zusätzlichen Platz, verursachen elektrische Verluste und können zu Resonanzen mit dem angeschlossenen Energieversorgungsnetz führen. Die Resonanzfrequenz der Passivfilter kann durch eine hohe Schaltfrequenz der Sub-Module angehoben werden, um Stabilitätsprobleme mit dem Energieversorgungsnetz zu vermeiden, wodurch sich aber die Stromrichterverluste erhöhen.

Aus der WO 1999041828 A1 ist es bereits bekannt, Sub-Module mit Leistungshalbleitern unterschiedlicher Sperrspannungsfestigkeit auszuführen, um mit relativ wenigen Sub-Modulen sehr viel kleinere Spannungsstufungen zu erreichen. Das hat jedoch den Nachteil, dass eine Vielzahl von Ersatzteilen unterschiedlicher Sub-Modultypen vorgehalten werden müssen und die Stückzahl der einzelnen Sub-Modultypen deutlich niedriger ist, als wenn nur ein Sub-Modultyp gefertigt werden muss.

Die Patentanmeldung US 2012/0314466 A1 offenbart ein Verfahren zum Regeln eines modularen Mehrstufenstromrichters, bei dem Zustandsistwerte, die den Zustand des Stromrichters beschreiben, mit Zustandssollwerten unter Gewinnung von Regeldifferenzwerten verglichen werden, und die Regeldifferenzwerte einer Regelungseinheit zugeführt werden, die an ihrem Ausgang Stellspannungswerte erzeugt. Eine Steuerelektronik erzeugt in Abhängigkeit der Stellspannungswerte Steuersignale für die Leistungshalbleiter des Stromrichters.

Aus der Patentanmeldung GB 2538270 A ist es bekannt, bei einem modularen Mehrstufenstromrichter die Energiespeicher der Module mit unterschiedlichen Spannungen zu betreiben, wodurch zusätzliche Spannungslevel erzeugt werden können.

Aus der Schrift "Experimental Comparison of Model Predictive Control and Cascaded Control of the Modular Multilevel Converter" von J. Böcker et al, IEEE Transactions on Power Electronics, Institute of Electrical and Electronics Engineers, Bd. 30, Nr. 1, 1. Januar 2015, Seiten 422-430, XP011557533 ist ein modularer Mehrstufenstromrichter bekannt, der zwei Stromrichterzweige mit jeweils zwei Submodulen aufweist. Für die Submodule des ersten Stromrichterzweigs und für die Submodule des zweiten Stromrichterzweigs werden unterschiedliche Referenzwerte für die Ausgangsspannungen verwendet.

Die Aufgabe der Erfindung ist ein Verfahren zum Betrieb eines mehrphasigen Mehrstufenstromrichters und einen entsprechenden Mehrstufenstromrichter zu erzielen, der bei relativ wenigen Sub-Modulen pro Phasenmodul geringere Netzrückwirkungen aufweist, wobei die Sub-Module aus Kostengründen aus Halbleitern gleicher Sperrspannungsfestigkeit bestehen sollen.

Die Aufgabe wird bezogen auf das Verfahren durch die Merkmale des Anspruchs 1 und bezogen auf den Mehrstufenstromrichter durch die Merkmale des Anspruchs 3 gelöst; die Unteransprüche stellen vorteilhafte Ausgestaltungen dar.

Die Lösung sieht bezogen auf das Verfahren vor, dass jedes Phasenmodul aus mehreren Gruppen von unmittelbar hintereinander in Reihe geschalteten Sub-Modulen gebildet ist, dass die Zwischenkreisspannungen einer Gruppe jeweils gleich und die Zwischenkreisspannungen von verschiedenen Gruppen eines Phasenmoduls unterschiedlich sind, dass jeder Gruppe ein Wichtungsfaktor zugeordnet ist, wobei die Summe der Wichtungsfaktoren aller Gruppen eines Phasenmoduls gleich eins ist, dass durch Multiplikation der Haupt-Stellspannung mit dem Wichtungsfaktor der Gruppe den Gruppen Teil-Stellspannungen zugeordnet werden, dass abhängig von der Teil-Stellspannung der Gruppe jeweils Schaltbefehle für die Sub-Module der Gruppe ausgegeben werden, dass die Zwischenkreisspannungen der Sub-Module gemessen und anhand der Zwischenkreisspannungen die in den Energiespeichern der Sub-Module gespeicherten Energien berechnet werden, dass die aufsummierten Energien der Sub-Module des Phasenmoduls mit einem Energie-Sollwert verglichen werden und aus der Differenz ein Korrektur-Strom ermittelt wird, und dass der vorgegebene Sollstrom jeweils um den ermittelten Korrektur-Strom korrigiert wird.

Eine technisch einfache Möglichkeit, Schaltbefehle für die Sub-Module zu bilden, ergibt sich dadurch, dass für jede Gruppe anhand der zugeordneten Teil-Stellspannung eine Pulsmusterspannung erzeugt wird und anhand der Pulsmusterspannung die Schaltbefehle für die Sub-Module der Gruppe generiert werden.

Im einfachsten Fall ist der Energiespeicher als elektrischer Kondensator ausgebildet und die Zwischenkreisspannung gleich der Kondensatorspannung.

Die Lösung sieht bezogen auf den Mehrstufenstromrichter vor, dass jedes Phasenmodul aus mehreren Gruppen von unmittelbar hintereinander in Reihe geschalteten Sub-Modulen gebildet ist, dass die Zwischenkreisspannungen einer Gruppe jeweils gleich und die Zwischenkreisspannungen von verschiedenen Gruppen eines Phasenmoduls unterschiedlich sind, dass jeder Gruppe ein Wichtungsfaktor zugeordnet ist, wobei die Summe der Wichtungsfaktoren aller Gruppen eines Phasenmoduls gleich eins ist, dass eine Zuordnung von Teil-Stellspannungen zu den Gruppen durch Multiplikation der Haupt-Stellspannung mit dem Wichtungsfaktor der Gruppe erfolgt, dass eine Ausgabe vom Schaltbefehlen für die Sub-Module der Gruppe jeweils abhängig von der Teil-Stellspannung der Gruppe erfolgt, dass eine Messung der Zwischenkreisspannungen der Sub-Module und eine Berechnung der in den Energiespeichern der Sub-Module gespeicherten Energien anhand der Zwischenkreisspannungen erfolgt, dass ein Vergleich der aufsummierten Energien der Sub-Module des Phasenmoduls mit einem Energie-Sollwert und die Ermittlung eines Korrektur-Stroms aus der Differenz erfolgt, und dass jeweils eine Korrektur des vorgegebenen Sollstroms um den ermittelten Korrektur-Strom erfolgt.

Erfindungsgemäß werden also Gruppen von Sub-Modulen innerhalb eines Phasenmoduls (Stromrichterzweigs) mit unterschiedlichen Zwischenkreisspannungen (insbesondere Kondensatorspannungen) der Energiespeicher (insbesondere Kondensatoren) betrieben, so dass die erforderliche Spannung an den Anschlussklemmen durch kleinere Stufungen erreicht wird. Die Aufteilung der Sub-Modulspannungen wird erreicht, indem Gruppen von Sub-Modulen mit einer Pulsmustergenerierung angesteuert wird und dieser Pulsmustergenerierung eine gewichtete Teil-Stellspannung (ein gewichtetes Stellsignal) zugeführt wird. Durch diese Wichtung wird die Verteilung der Sub-Modulspannungen gesteuert.

Die Vorteile sind der Einsatz eines leistungsstarken Sub-Moduls, das in sehr hoher Stückzahl gefertigt werden kann, auch für Stromrichter kleiner Leistung, ohne Passivfilter zu benötigen, und in einer Verringerung der Schaltfrequenzverluste. Weiter kann auf Passivfilter verzichtet werden, und zwar durch eine feinere Spannungsstufung, welche durch die unterschiedlichen Kondensatorspannungen des gleichen Sub-Modultyps erreicht wird.

Die Erfindung wird nachfolgend anhand eines Ausführungsbeispiels näher beschrieben. Es zeigen:
- Fig. 1: eine Anordnung 1 mit einem modularen Mehrstufenstromrichter,
- Fig. 2: einen Mehrstufenstromrichter,
- Fig. 3: einen Mehrstufenstromrichter mit sechs Phasenmodulen,
- Fig. 4: einen Mehrstufenstromrichter mit drei Phasenmodulen in Sternschaltung,
- Fig. 5: ein einzelnes Phasenmodul,
- Fig. 6: das Phasenmodul gemäß Fig. 5 mit seinen Sub-Modulen,
- Fig. 7: ein Sub-Modul,
- Fig. 8: eine Leistungshalbleiterschaltung als Vollbrückenschaltung,
- Fig. 9: eine Leistungshalbleiterschaltung als Halbbrückenschaltung,
- Fig. 10: ein Kondensatormodul eines Sub-Moduls,
- Fig. 11: eine Ansteuereinheit mit einem Energieregler und einer Energieberechnung für ein einzelnes Phasenmodul,
- Fig. 12: den Energieregler gemäß Fig. 11,
- Fig. 13: die Energieberechnung gemäß Fig. 11 und
- Fig. 14: das Verfahren zum Betrieb des Mehrstufenstromrichters in einem Ablaufdiagramm.

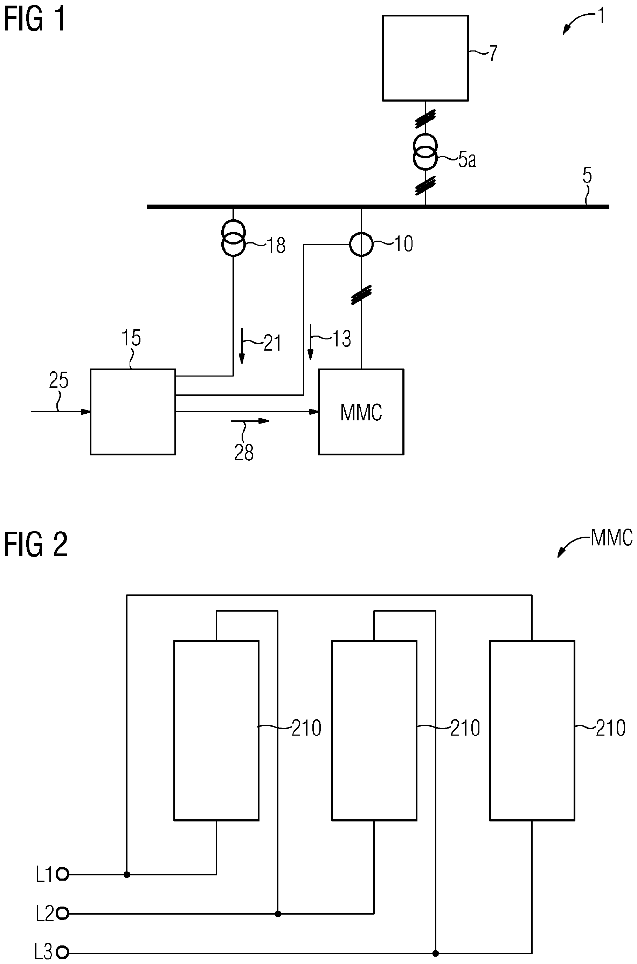

In Fig. 1 ist eine Anordnung 1 mit einem modularen Mehrstufenstromrichter MMC (Modular Multilevel Converter MMC) dargestellt. Der modulare Mehrstufenstromrichter MMC ist dreiphasig über eine Anschlussschiene 5 und einen Transformator 5a mit einem Energieversorgungsnetz 7 elektrisch verbunden. Das Energieversorgungsnetz 7 ist im Ausführungsbeispiel ein dreiphasiges Wechselspannungs-Energieversorgungsnetz. Mittels eines Stromsensors 10 wird der durch den Mehrstufenstromrichter MMC fließende Strom gemessen. Strommesswerte 13 werden zu einer Ansteuereinheit 15 für den modularen Mehrstufenstromrichter MMC übertragen. Weiterhin wird mittels eines Spannungssensors 18 (der hier als ein Messwandler ausgeführt ist) die an der Anschlussschiene 5 anliegende Spannung gemessen. Diese Spannung entspricht im Wesentlichen der an dem modularen Mehrstufenstromrichter anliegenden Spannung. Die Spannungsmesswerte der Anschlussspannung 21 werden zu der Ansteuereinheit 15 übertragen.

Anhand von vorgegebenen Sollwerten 25 berechnet die Ansteuereinheit 15 Ansteuersignale 28, die zum modularen Mehrstufenstromrichter MMC übertragen werden. Mittels dieser Ansteuersignale 28 wird der Mehrstufenstromrichter MMC derart angesteuert, dass sich an der Anschlussschiene 5 die gewünschten Strom- und Spannungswerte einstellen. Die Ansteuereinheit 15 kontrolliert auf diese Weise den Mehrstufenstromrichter MMC.

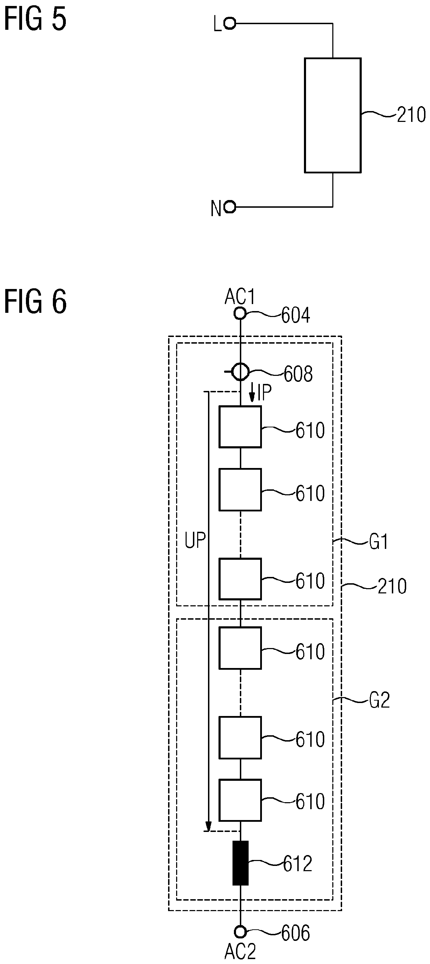

In Fig. 2 ist ein Ausführungsbeispiel eines Mehrstufenstromrichters MMC dargestellt, welcher drei Phasenmodule 210 aufweist. Die drei Phasenmodule 210 sind in Dreiecksschaltung geschaltet und mit drei Phasen L1, L2 und L3 des Energieversorgungsnetzes 7 verbunden. Der Aufbau der Phasenmodule 210 ist in Fig. 6 gezeigt.

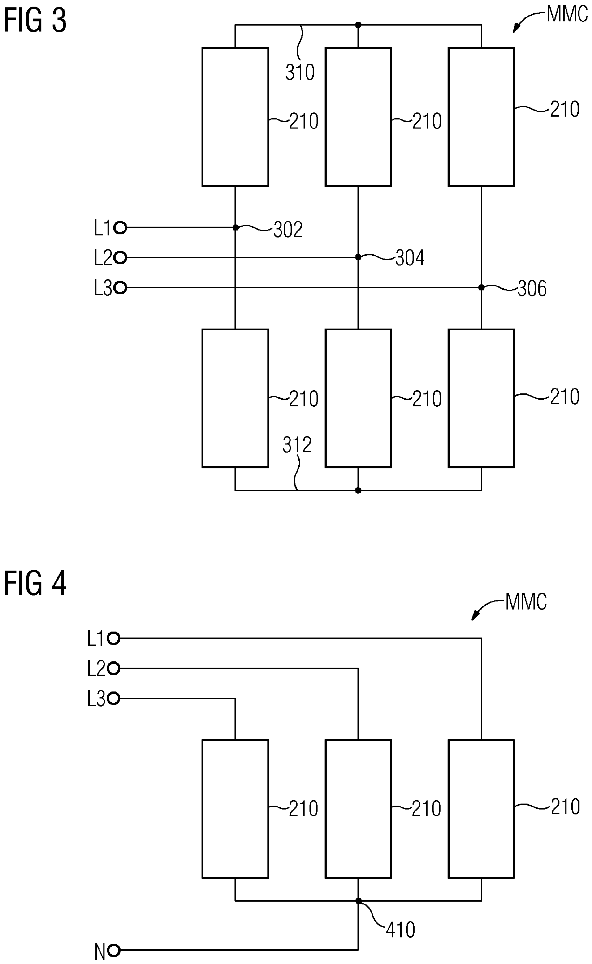

In Fig. 3 ist ein Ausführungsbeispiel eines Mehrstufenstromrichters MMC dargestellt, welcher sechs Phasenmodule 210 aufweist. Diese sechs Phasenmodule 210 sind in einer Brückenschaltung (hier: in einer B6-Brückenschaltung) angeordnet. Dabei sind jeweils ein Anschluss eines ersten Phasenmoduls und ein Anschluss eines zweiten Phasenmoduls miteinander elektrisch verbunden und bilden einen Wechselspannungsanschluss 302, 304 oder 306.

Der andere Anschluss des ersten Phasenmoduls ist mit einem positiven Gleichspannungsanschluss 310 verbunden; der andere Anschluss des zweiten Phasenmoduls ist mit einem negativen Gleichspannungsanschluss 312 verbunden. Die drei Wechselspannungsanschlüsse 302, 304 und 306 sind mit drei Phasen L1, L2 und L3 des Wechselspannungs-Energieversorgungsnetzes 7 verbunden.

Fig. 4 zeigt ein Ausführungsbeispiel eines modularen Mehrstufenstromrichters MMC, bei dem drei Phasenmodule 210 in Sternschaltung geschaltet sind. Dabei sind Anschlüsse der drei Phasenmodule 210 miteinander elektrisch verbunden und bilden einen Sternpunkt 410. Der Sternpunkt 410 ist mit einem Rückleiter N des Energieversorgungsnetzes 7 verbunden. Die jeweils drei anderen Anschlüsse der Phasenmodule 210 sind jeweils mit einer Phase (L1, L2 oder L3) des Energieversorgungsnetzes 7 verbunden.

In Fig. 5 ist ein einzelnes Phasenmodul 210 dargestellt, welches einphasig an ein Energieversorgungsnetz angeschlossen werden kann. Dabei kann dieses Phasenmodul 210 zwischen einer Phase L und dem Rückleiter N des Energieversorgungsnetzes angeschlossen werden, wie in Fig. 5 dargestellt ist.

In Fig. 6 ist ein Ausführungsbeispiel des Phasenmoduls 210 näher dargestellt. Das Phasenmodul 210 weist einen ersten Anschluss 604 sowie einen zweiten Anschluss 606 auf. Der ersten Anschluss 604 ist über einen Stromsensor 608 mit einem ersten Sub-Modul 610 elektrisch verbunden. Das erste Sub-Modul 610 ist elektrisch in Reihe geschaltet mit weiteren Sub-Modulen 610; insgesamt weist das Phasenmodul 210 n Sub-Module 610 auf, wobei n hier beispielhaft 18 und damit kleiner als 20 ist. Das letzte der n Sub-Module 610 ist über eine Koppelinduktivität 612 elektrisch mit dem zweiten Anschluss 606 verbunden. Mittels des Stromsensors 608 wird der durch das Phasenmodul 210 fließende Strom IP gemessen. Der erste Anschluss 604 und der zweite Anschluss 606 können jeweils mit einer Phase des Wechselspannungs-Energieversorgungsnetzes 7 verbunden sein. Die Sub-Module 610 sind hier beispielhaft in zwei Gruppen G1, G2 von (hier je neun) unmittelbar hintereinander in Reihe geschalteten Sub-Modulen 610 unterteilt.

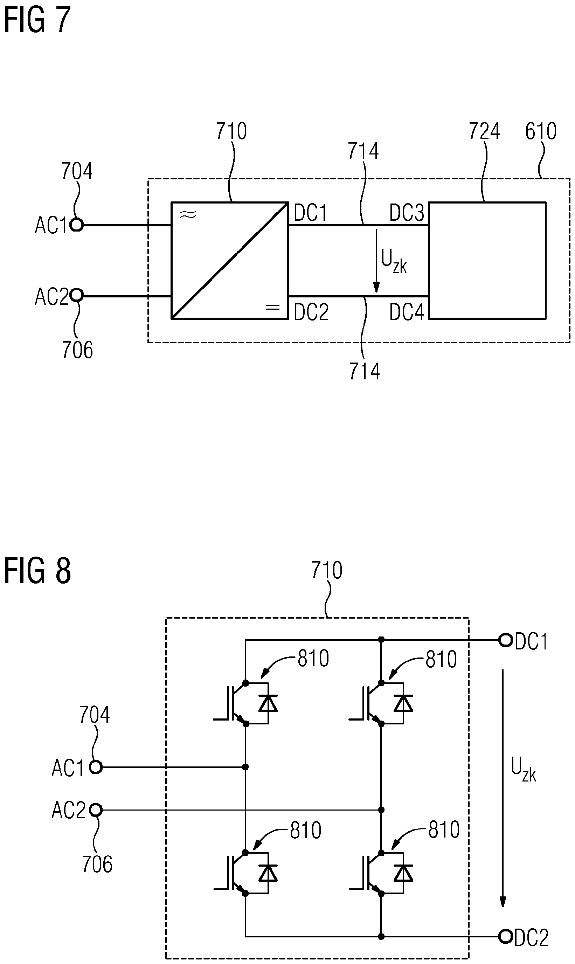

In Fig. 7 ist ein Ausführungsbeispiel des Sub-Moduls 610 im Detail dargestellt. Das zweipolige Sub-Modul 610 weist einen ersten Sub-Modulanschluss 704 und einen zweiten Sub-Modulanschluss 706 auf. Die beiden Sub-Modulanschlüsse 704 und 706 sind mit einer Leistungshalbleiterschaltung 710 verbunden (genauer gesagt mit einem Wechselspannungsanschluss der Leistungshalbleiterschaltung 710). Ein Gleichspannungsanschluss der Leistungshalbleiterschaltung 710 ist über einen Gleichspannungszwischenkreis 714 mit einem Energiespeicher 724 verbunden. In dem Gleichspannungszwischenkreis 714 ist die Zwischenkreisspannung Uzk vorhanden. Die Leistungshalbleiterschaltung 710 wird auch als "Powermodul" bezeichnet.

In Fig. 8 ist ein Ausführungsbeispiel der Leistungshalbleiterschaltung 710 dargestellt. Die Leistungshalbleiterschaltung 710 weist vier Leistungshalbleiterschalter 810 auf, die ein- und ausschaltbar sind. Jeder der Leistungshalbleiterschalter 810 weist ein Leistungshalbleiterbauelement mit einer antiparallel geschalteten Diode auf. Im Ausführungsbeispiel der Fig. 8 ist das Leistungshalbleiterbauelement ein IGBT (Insulated Gate Bipolar Transistor). In anderen Ausführungsbeispielen kann das Halbleiterbauelement jedoch auch anders ausgestaltet sein, zum Beispiel als ein IGCT (Integrated Gate-Commutated Thyristor), IEGT (Injection-Enhanced Gate Transistor) oder als ein MOSFET (Metal-Oxide-Semiconductor Field-Effect Transistor). Die vier Halbleiterschalter 810 bilden im Ausführungsbeispiel der Fig. 8 eine Vollbrückenschaltung. Dadurch kann die Polarität der zwischen dem ersten Sub-Modulanschluss 704 und dem zweiten Sub-Modulanschluss 706 anliegenden Spannung umgekehrt werden.

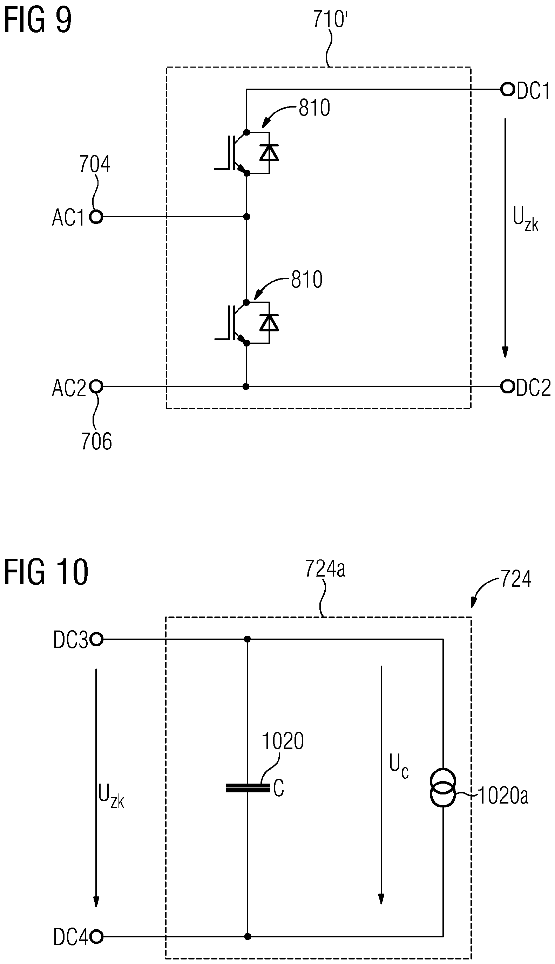

In Fig. 9 ist ein weitere Ausführungsbeispiel einer Leistungshalbleiterschaltung 710' dargestellt, welche lediglich zwei Leistungshalbleiterschalter 810 aufweist und auch nur für einen Mehrstufenstromrichter MMC gemäß Fig. 3 geeignet ist. Die beiden Leistungshalbleiterschalter 810 bilden im Ausführungsbeispiel der Fig. 9 eine Halbbrückenschaltung. Dadurch kann zwischen dem ersten Sub-Modulanschluss 704 und dem zweiten Sub-Modulanschluss 706 nur eine Spannung einer Polarität (oder eine Nullspannung) ausgegeben werden.

In Fig. 10 ist der Energiespeicher 724 in Form eines Kondensatormoduls 724a dargestellt, das hier aus einem Kondensator C als Energiespeicher 1020 und einer parallelgeschalteten Spannungsmesseinrichtung 1020a besteht, wobei am Kondensator C die Zwischenkreisspannung Uzk als Kondensatorspannung UC anliegt und von diesem gepuffert wird.

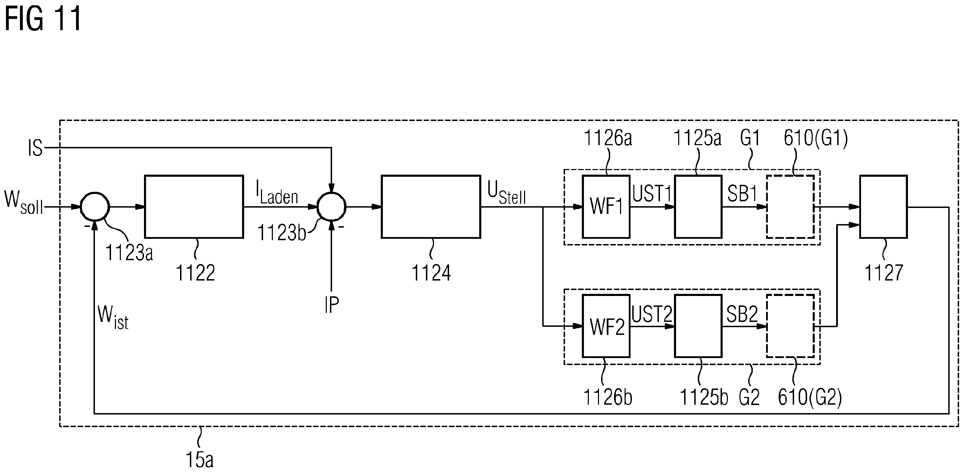

In Fig. 11 ist eine Ansteuereinheit 15a für ein einzelnes Phasenmodul 210 als ein Teil der Ansteuereinheit 15 dargestellt, welche einen Mikrokontroller, Signalprozessor, FPGA oder SPS aufweist. Einer Vergleichseinrichtung 1123b werden ein Strom-Sollwert IS als (erster) Sollwert 25 (s. Fig. 1) und der gemessene Phasenmodulstrom IP zugeführt und voneinander abgezogen. Die Differenz wird von der Vergleichseinrichtung 1123b um einen Stromstellwert Iladen korrigiert, der von einem Energieregler 1122 an die Vergleichseinrichtung 1123b ausgegeben wird. Die korrigierte Differenz wird als Stromregelfehler RFW einem Stromregler 1124, z.B. in Form eines PI-Reglers, zugeführt, der für das Phasenmodul 210 eine Haupt-Stellspannung UStell berechnet und ausgibt.

Jeder Gruppe G1, G2 ist ein positiver Wichtungsfaktor WF1, WF2 zugeordnet, wobei die Summe der Wichtungsfaktoren WF1, WF2 aller Gruppen, hier der beiden Gruppen G1, G2, eines Phasenmoduls 210 gleich eins ist. Die Haupt-Stellspannung UStell des Stromreglers 1124 wird in den Multiplizierern 1126a, 1126b mit den Wichtungsfaktoren WF1, WF2 der Gruppen G1, G2 multipliziert, denen auf diese Weise Teil-Stellspannungen UST1, UST2 zugeordnet werden. Anschließend wird für jede Gruppe G1, G2 mittels der zugeordneten Teil-Stellspannung UST1, UST2 mittels einer Pulsmustergenerierung 1125a, 1125b eine Pulsmusterspannung PMU1, PMU2 erzeugt und anhand der Pulsmusterspannung PMU1, PMU2 werden Schaltbefehle SB1, SB2 als Ansteuersignale 28 (s. Fig. 1) für die Sub-Module 610 der Gruppe G1, G2 ausgegeben, die in Fig. 11 mit Sub-Modul 610 (G1) und Sub-Modul 610 (G2) bezeichnet sind.

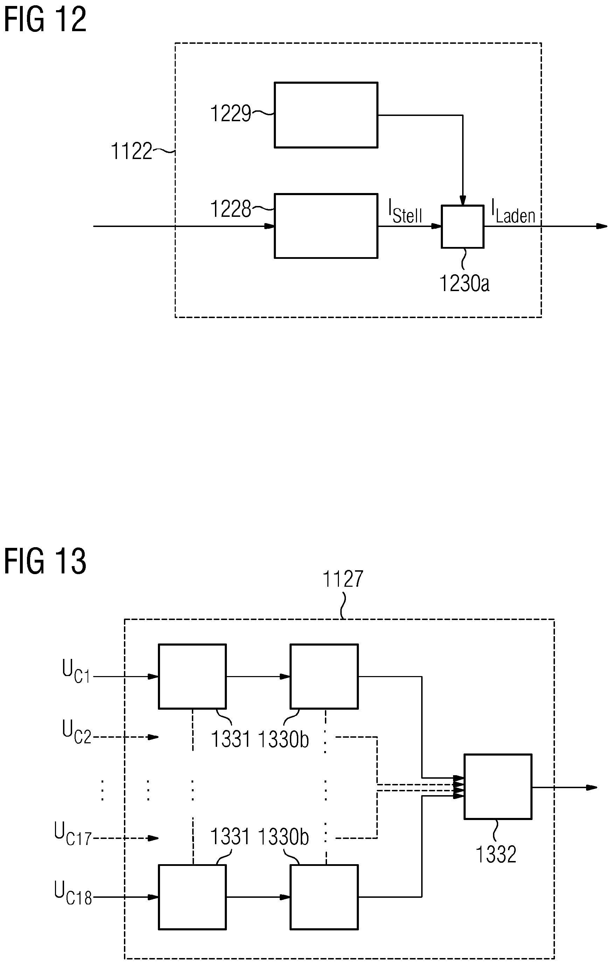

Die Spannungen UC der Kondensatoren C (in Fig. 13 UC1, ..., UC18 der insgesamt 18 Sub-Module 610) werden mittels der Spannungsmesseinrichtungen 1020a gemessen. Die gemessenen Kondensatorspannungen UC der Sub-Module 610 des Phasenmoduls 210 werden jeweils einer Energieberechnung 1127 zugeführt. Die Energieberechnung 1127 ermittelt anhand der Kondensatorspannungen UC die Summenenergie Wist des Phasenmoduls 210 und gibt diese an eine Vergleichseinrichtung 1123a aus, welche die Summenenergie mit einem Energie-Sollwert Wsoll als (zweitem) Sollwert 25 (s. Fig. 1) vergleicht und die Differenz in Form eines Energieregelfehlers RFW dem Energieregler 1122 zuführt.

In Fig. 12 ist der Energieregler 1122 dargestellt, der einen Regler 1128 aufweist, welcher beispielhaft als PI-Regler ausgeführt ist. Die Ausgabe IStell des Reglers 1128 wird mit einem in einem Sinusgenerator 1129 generierten, netzfrequenten Sinussignal, das mit der Anschlussspannung 18 (s. Fig. 1) jeweils in Phase ist, in einem Multiplizierer 1230a multipliziert.

Fig. 13 zeigt die Energieberechnung 1127 aus den gemessenen Kondensatorspannungen UC aller Sub-Module des Phasenmoduls 210. Jeder Spannungswert UC1, ..., UC18 (wegen der hier beispielhaft angenommenen 18 Sub-Module) wird mittels einem Quadrierer 1331 quadriert, mit 0,5xCc (Cc ist die Sub-Modulkapazität) in einem Multiplizierer 1330b multipliziert und alle Berechnungsergebnisse werden anschließend jeweils in einem Summierer 1332 aufsummiert.

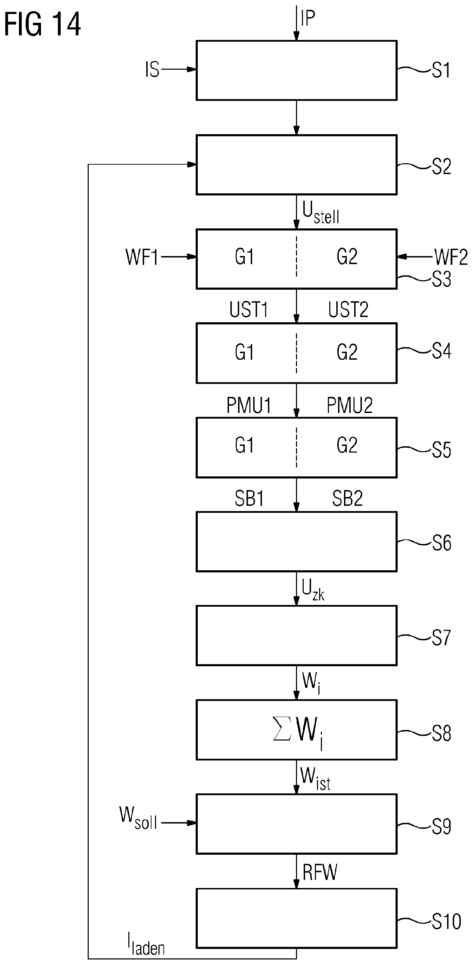

Fig. 14 zeigt das Verfahren zum Betrieb des Mehrstufenstromrichters MMC in einem Ablaufdiagramm mit den Schritten S1 - S10 für jedes Phasenmodul 210:
S1 - Vorgabe des Sollstroms IS und Messung des Phasenmodulstroms IP,
S2 - Ermittlung der Haupt-Stellspannung UStell unter Berücksichtigung des Stromstellwerts Iladen,
S3 - Multiplikation der Haupt-Stellspannung UStell mit dem Wichtungsfaktor WF1, WF2 der jeweiligen Gruppe G1, G2 zur Ermittlung der den Gruppen G1, G2 zugeordneten Teil-Stellspannungen UST1, UST2,
S4 - Erzeugung einer Pulsmusterspannung PMU1, PMU2 für jede Gruppe G1, G2 anhand der zugehörigen Teil-Stellspannung UST1, UST2,
S5 - Generierung von Schaltbefehlen SB1, SB2 für die Sub-Module 610 (G1), 610 (G2) der jeweiligen Gruppe G1, G2 anhand der zur Gruppe G1, G2 gehörigen Pulsmusterspannung PMU1, PMU2,
S6 - Messung der Zwischenkreisspannungen Uzk (speziell der Kondensatorspannungen UC) der Sub-Module 610,
S7 - Berechnung der in den Energiespeichern 724 der Sub-Module 610 gespeicherten Energien Wi anhand der Zwischenkreisspannungen Uzk (speziell der Kondensatorspannungen UC)
S8 - Aufsummierung der Energien Wi der Sub-Module 610 zur Summenenergie Wist,
S9 - Vergleich der Summenenergie Wist mit einem Energie-Sollwert Wsoll zur Ermittlung des Regelfehlers RFW der Energie und
S10 - Ausgabe des Stromstellwerts Iladen durch den Energieregler 1122.

In Fig. 6, 10 bis 13 sind die Phasenmodule 210 beispielhaft nur zwei Gruppen G1, G2 gebildet. Allgemein ist aber jedes Phasenmodul 210 aus mehreren Gruppen (also auch aus mehr als zwei Gruppen) von unmittelbar hintereinander in Reihe geschalteten Sub-Modulen 610 gebildet.

## Patentansprüche

1. Verfahren zum Betrieb eines mehrphasigen Mehrstufenstromrichters (MMC), der mehrere Phasenmodule (210) aufweist, die jeweils aus mehreren elektrisch in Reihe geschalteten zweipoligen Sub-Modulen (610) gebildet sind, welche jeweils mehrere Halbleiterschalter (710, 710') und einen Energiespeicher (724) aufweisen, an dem eine Zwischenkreisspannung (Uzk) anliegt, bei dem in Abhängigkeit von einem vorgegebenen Sollstrom (IS) eine Haupt-Stellspannung (UStell) ausgegeben wird, wobei ein Phasenmodul jeweils ein Stromrichterzweig ist,
das so ausgestaltet ist,
dass jedes Phasenmodul (210) aus mehreren Gruppen (G1, G2) von unmittelbar hintereinander in Reihe geschalteten Sub-Modulen (610) gebildet ist,
dass die Zwischenkreisspannungen (Uzk) einer Gruppe (G1, G2) jeweils gleich und die Zwischenkreisspannungen (Uzk) von verschiedenen Gruppen (G1, G2) eines Phasenmoduls (210) unterschiedlich sind,
dass jeder Gruppe (G1, G2) ein Wichtungsfaktor (WF1, WF2) zugeordnet ist, wobei die Summe der Wichtungsfaktoren (WF1, WF2) aller Gruppen (G1, G2) eines Phasenmoduls (210) gleich eins ist,
dass durch Multiplikation der Haupt-Stellspannung (UStell) mit dem Wichtungsfaktor (WF1, WF2) der Gruppe (G1, G2) den Gruppen (G1, G2) Teil-Stellspannungen (UST1, UST2) zugeordnet werden,
dass abhängig von der Teil-Stellspannung (UST1, UST2) der Gruppe (G1, G2) jeweils Schaltbefehle (SB1, SB2) für die Sub-Module (610) der Gruppe (G1, G2) ausgegeben werden,
dass die Zwischenkreisspannungen (Uzk) der Sub-Module (610) gemessen und anhand der Zwischenkreisspannungen (Uzk) die in den Energiespeichern (724) der Sub-Module (610) gespeicherten Energien (Wi) berechnet werden,
dass die aufsummierten Energien (Wi) der Sub-Module (610) als Summenenergie (Wist) des Phasenmoduls (210) mit einem Energie-Sollwert (Wsoll) verglichen werden und aus der Differenz ein Stromstellwert (Iladen) ermittelt wird,
dass der vorgegebene Sollstrom (IS) jeweils um den Stromstellwert (Iladen) korrigiert wird, und
dass für jede Gruppe (G1, G2) anhand der zugeordneten Teil-Stellspannung (UST1, UST2) eine Pulsmusterspannung (PMU1, PMU2) erzeugt wird und anhand der Pulsmusterspannung (PMU1, PMU2) die Schaltbefehle (SB1, SB2) für die Sub-Module (610) der (jeweiligen) Gruppe (G1, G2) generiert werden.

2. Verfahren nach Anspruch 1,
**dadurch gekennzeichnet,**
**dass** der Energiespeicher (724) als elektrischer Kondensator (C) ausgebildet und die Zwischenkreisspannung (Uzk) gleich der Kondensatorspannung (UC) ist.

3. Mehrphasiger Mehrstufenstromrichter (MMC), der mehrere Phasenmodule (210) aufweist, die jeweils aus mehreren elektrisch in Reihe geschalteten zweipoligen Sub-Modulen (610) gebildet sind, welche jeweils mehrere Halbleiterschalter (710, 710') und einen Energiespeicher (724) aufweisen, an dem eine Zwischenkreisspannung (Uzk) anliegt, mit einer Ausgabe einer Haupt-Stellspannung (UStell) in Abhängigkeit von einem vorgegebenen Sollstrom (IS), wobei ein Phasenmodul jeweils ein Stromrichterzweig ist,
der so ausgestaltet ist,
dass jedes Phasenmodul (210) aus mehreren Gruppen (G1, G2) von unmittelbar hintereinander in Reihe geschalteten Sub-Modulen (610) gebildet ist,
dass die Zwischenkreisspannungen (Uzk) einer Gruppe (G1, G2) jeweils gleich und die Zwischenkreisspannungen (Uzk) von verschiedenen Gruppen (G1, G2) eines Phasenmoduls (210) unterschiedlich sind,
dass jeder Gruppe (G1, G2) ein Wichtungsfaktor (WF1, WF2) zugeordnet ist, wobei die Summe der Wichtungsfaktoren (WF1, WF2) aller Gruppen (G1, G2) eines Phasenmoduls (210) gleich eins ist,
dass eine Zuordnung von Teil-Stellspannungen (UST1, UST2) zu den Gruppen (G1, G2) durch Multiplikation der Haupt-Stellspannung (UStell) mit dem Wichtungsfaktor (WF1, WF2) der Gruppe (G1, G2) erfolgt,
dass eine Ausgabe vom Schaltbefehlen (SB1, SB2) für die Sub-Module (610) der Gruppe (G1, G2) jeweils abhängig von der Teil-Stellspannung (UST1, UST2) der Gruppe (G1, G2) erfolgt, dass eine Messung der Zwischenkreisspannungen (Uzk) der Sub-Module (610) und eine Berechnung der in den Energiespeichern (724) der Sub-Module (610) gespeicherten Energien (Wi) anhand der Zwischenkreisspannungen (Uzk) erfolgt,
dass ein Vergleich der aufsummierten Energien (Wi) der Sub-Module (610) des Phasenmoduls (210) mit einem Energie-Sollwert (Wsoll) und die Ermittlung eines Stromstellwerts (Iladen) aus der Differenz erfolgt,
dass jeweils eine Korrektur des vorgegebenen Sollstroms (IS) um den Stromstellwerts (Iladen) erfolgt, und
dass für jede Gruppe (G1, G2) die Erzeugung einer Pulsmusterspannung (PMU1, PMU2) anhand der zugeordneten Teil-Stellspannung (UST1, UST2) und anhand der Pulsmusterspannung (PMU1, PMU2) eine Generierung von Schaltbefehle (SB1, SB2) für die Sub-Module (610) der jeweiligen Gruppe (G1, G2) erfolgt.

## Claims

1. Method for operating a multiphase multilevel converter (MMC) which has a plurality of phase modules (210) each formed of a plurality of two-pole submodules (610) which are electrically connected in series and which each have a plurality of semiconductor switches (710, 710') and an energy storage unit (724) at which a DC link voltage (Uzk) is present, in which method a main actuating voltage (Ustell) is output as a function of a predefined target current (IS), wherein a phase module is in each case a converter branch which is designed in such a way
that each phase module (210) is formed of a plurality of groups (G1, G2) of submodules (610) which are connected in series immediately one after another,
that the DC link voltages (Uzk) of one group (G1, G2) are each identical and the DC link voltages (Uzk) of different groups (G1, G2) of a phase module (210) are different,
that a weighting factor (WF1, WF2) is assigned to each group (G1, G2), wherein the sum of the weighting factors (WF1, WF2) of all the groups (G1, G2) of a phase module (210) is equal to one,
that, by multiplying the main actuating voltage (Ustell) by the weighting factor (WF1, WF2) of the group (G1, G2), partial actuating voltages (UST1, UST2) are assigned to the groups (G1, G2),
that switching commands (SB1, SB2) for the submodules (610) of the group (G1, G2) are in each case output as a function of the partial actuating voltage (UST1, UST2) of the group (G1, G2), that the DC link voltages (Uzk) of the submodules (610) are measured and the energies (Wi) stored in the energy storage units (724) of the submodules (610) are calculated on the basis of the DC link voltages (Uzk),
that the summed energies (Wi) of the submodules (610), as summed energy (Wist) of the phase module (210), are compared with an energy target value (Wsoll) and a current actuating value (Iladen) is ascertained from the difference,
that the predefined target current (IS) is corrected in each case by the current actuating value (Iladen), and
that for each group (G1, G2) a pulse pattern voltage (PMU1, PMU2) is produced on the basis of the assigned partial actuating voltage (UST1, UST2) and the switching commands (SB1, SB2) for the submodules (610) of the (respective) group (G1, G2) are generated on the basis of the pulse pattern voltage (PMU1, PMU2).

2. Method according to Claim 1,
**characterized**
**in that** the energy storage unit (724) is configured as an electrical capacitor (C) and the DC link voltage (Uzk) is equal to the capacitor voltage (UC).

3. Multiphase multilevel converter (MMC) which has a plurality of phase modules (210) each formed of a plurality of two-pole submodules (610) which are electrically connected in series and which each have a plurality of semiconductor switches (710, 710') and an energy storage unit (724) at which a DC link voltage (Uzk) is present, said converter outputting a main actuating voltage (Ustell) as a function of a predefined target current (IS), wherein a phase module is in each case a converter branch which is designed in such a way that each phase module (210) is formed of a plurality of groups (G1, G2) of submodules (610) which are connected in series immediately one after another,
that the DC link voltages (Uzk) of one group (G1, G2) are each identical and the DC link voltages (Uzk) of different groups (G1, G2) of a phase module (210) are different,
that a weighting factor (WF1, WF2) is assigned to each group (G1, G2), wherein the sum of the weighting factors (WF1, WF2) of all the groups (G1, G2) of a phase module (210) is equal to one,
that partial actuating voltages (UST1, UST2) are assigned to the groups (G1, G2) by multiplying the main actuating voltage (Ustell) by the weighting factor (WF1, WF2) of the group (G1, G2),
that switching commands (SB1, SB2) for the submodules (610) of the group (G1, G2) are in each case output as a function of the partial actuating voltage (UST1, UST2) of the group (G1, G2), that the DC link voltages (Uzk) of the submodules (610) are measured and the energies (Wi) stored in the energy storage units (724) of the submodules (610) are calculated on the basis of the DC link voltages (Uzk),
that the summed energies (Wi) of the submodules (610) of the phase module (210) are compared with an energy target value (Wsoll) and a current actuating value (Iladen) is ascertained from the difference,
that the predefined target current (IS) is corrected in each case by the current actuating value (Iladen), and
that for each group (G1, G2) a pulse pattern voltage (PMU1, PMU2) is produced on the basis of the assigned partial actuating voltage (UST1, UST2) and switching commands (SB1, SB2) for the submodules (610) of the respective group (G1, G2) are generated on the basis of the pulse pattern voltage (PMU1, PMU2).

## Revendications

1. Procédé pour faire fonctionner un convertisseur (MMC) multiphasé à plusieurs étages, qui a plusieurs modules (210) de phase, qui sont constitués chacun de plusieurs sous-modules (610) bipolaires montés électriquement en série, qui ont chacun plusieurs interrupteurs (710, 710') à semiconducteur et un accumulateur (724) d'énergie, auquel s'applique une tension (Uzk) de circuit intermédiaire, dans lequel on sort une tension (UStell) de réglage principale en fonction d'un courant (IS) de consigne donnée à l'avance, un module de phase étant respectivement une branche du convertisseur,
qui est conformée,
de manière à ce que chaque module (210) de phase soit formé de plusieurs groupes (G1, G2) de sous-modules (610) montés en série directement les uns derrière les autres,
en ce que les tensions (Uzk) de circuit intermédiaire d'un groupe (G1, G2) sont égales et les tensions (Uzk) de circuit intermédiaire de groupes (G1, G2) différents d'un module (210) de phase sont différentes,
en ce qu'un facteur (WF1, WF2) de pondération est affecté à chaque groupe (G1, G2), la somme des facteurs (WF1, WF2) de pondération de tous les groupes (G1, G2) d'un module (210) de phase étant égale à un,
en ce qu'en multipliant la tension (UStell) de réglage principale par le facteur (WF1, WF2) de pondération des groupes (G1,G2), on associe des tensions (UST1, UST2) de réglage partielles aux groupes (G1, G2),
en ce qu'en fonction de la tension (UST1, UST2) de réglage partielle des groupes (G1, G2), on sort respectivement des instructions (SB1, SB2) de coupure pour les sous-module (610) des groupes G2),
en ce qu'on mesure les tensions (Uzk) de circuit intermédiaire des sous-modules (610) et, à l'aide des tensions (Uzk) de circuit intermédiaire, on calcule les énergies (Wi) accumulées dans les accumulateurs (724) d'énergie des sous-modules (610),
en ce que l'on compare les énergies (Wi) sommées des sous-modules (610) en tant qu'énergie (Wist) somme du module (210) de phase à une valeur (Wsoll) de consigne d'énergie et on détermine une valeur (Iladen) de réglage du courant à partir de la différence,
en ce que l'on corrige le courant (IS) de consigne donné à l'avance respectivement de la valeur (Iladen) de réglage de courant, et en ce que, pour chaque groupe G2), on produit une tension (PMU1, PMU2) de modèle d'impulsion à l'aide de la tension (UST1, UST2) de réglage partielle associée et à l'aide de la tension (PMU1, PMU2) de modèle d'impulsion, on produit les instructions (SB1, SB2) de coupure pour les sous-modules (610) des groupes G2) respectifs.

2. Procédé suivant la revendication 1, **caractérisé en ce que** l'accumulateur (724) d'énergie est constitué sous la forme d'un condensateur (C) électrique et la tension (Uzk) de circuit intermédiaire est égale à la tension (UC) du condensateur.

3. Convertisseur (MMC) multiphasé à plusieurs étages, qui a plusieurs modules (210) de phase, qui sont formés chacun de plusieurs sous-modules (610) bipolaires montés en série électriquement, qui ont chacun plusieurs interrupteurs (710, 710') à semiconducteur et un accumulateur (724) d'énergie auquel s'applique une tension (Uzk) de circuit intermédiaire, comprenant une sortie d'une tension (UStell) de réglage principale en fonction d'un courant (IS) de consigne donnée à l'avance, dans lequel un module de phase est respectivement une branche de convertisseur, qui est conformée
de manière à former chaque module (210) de phase de plusieurs groupes G2) de sous-modules (610) montés en série directement les uns derrière les autres,
de manière à ce que les tensions (Uzk) de circuit intermédiaire d'un groupe G2) soient égales et de manière à ce que les tensions (Uzk) de circuit intermédiaire de groupes G2) différents d'un module (210) de phase soient différentes,
de manière à affecter un facteur (WF1, WF2) de pondération à chaque groupe G2), la somme des facteurs (WF1, WF2) de pondération de tous les groupes G2) d'un module (210) de phase étant égale à un,
de manière à produire une affectation de tension (UST1, UST2) de réglage partielle au groupe G2) par multiplication de la tension (UStell) de réglage principale par le facteur (WF1, WF2) de pondération des groupes G2),
de manière à ce qu'une sortie d'instructions (SB1, SB2) de coupure pour les sous-modules (610) des groupes G2) s'effectue respectivement en fonction de la tension (UST1, UST2) de réglage partielle des groupes G2),
de manière à effectuer une mesure des tensions (Uzk) de circuit intermédiaire des sous-modules (610) et à effectuer un calcul des énergies (Wi) accumulées dans les accumulateurs (724) d'énergie des sous-modules (610) à l'aide des tensions (Uzk) de circuit intermédiaire,
de manière à ce qu'une comparaison des énergies (Wi) sommées des sous-modules (610) du module (210) de phase ait une valeur (Wsoll) de consigne d'énergie et de manière à effectuer la détermination d'une valeur (Iladen) de réglage de courant à partir de la différence,
de manière à effectuer respectivement une correction du courant (IS) de consigne donnée à l'avance de la valeur (Iladen) de réglage du courant, et
de manière à effectuer, pour chaque groupe G2), la production d'une tension (PMU1, PMU2) de modèle d'impulsion à l'aide de la tension (UST1, UST2) de réglage partielle associée et, à l'aide de la tension (PMU1, PMU2) de modèle d'impulsion, une production d'instructions (SB1, SB2) de coupure pour les sous-modules (610) des groupes G2) respectifs.
